# EUROPÄISCHE PATENTSCHRIFT

(11) **EP 1 784 553 B1**
(45) Veröffentlichungstag und Bekanntmachung des Hinweises auf die Patenterteilung: **11.11.2009**
(21) Anmeldenummer: 05768303.9
(22) Anmeldetag: 20.07.2005
(51) Int. Cl.: E21B 7/30

(54) **VORRICHTUNG UND VERFAHREN ZUM VERBINDEN EINES ROHRSTRANGS MIT EINEM BOHR-, AUFWEIT- ODER EINZUGSGERÄT**
APPARATUS AND METHOD FOR JOINING A PIPE CONDUIT TO A DRILLING DEVICE, EXPANDING DEVICE, OR FEEDING DEVICE
DISPOSITIF ET PROCEDE PERMETTANT DE RACCORDER UNE LIGNE DE TUBES A UN APPAREIL DE FORAGE, D'EVASEMENT OU D'INTRODUCTION

(30) Priorität: 27.07.2004 DE 102004036425
(43) Veröffentlichungstag der Anmeldung: 16.05.2007
(73) Patentinhaber: Tracto-Technik GmbH, 57368 Lennestadt (DE)
(72) Erfinder: KOCH, Elmar, 59889 Eslohe (DE); KÖPER, Martin, 57439 Attendorn (DE)
(74) Vertreter: König, Gregor Sebastian
(86) Internationale Anmeldenummer: PCT/EP2005/007913
(87) Internationale Veröffentlichungsnummer: WO 2006/010549

(56) Entgegenhaltungen:
- EP-A- 0 860 638
- DE-A1- 10 125 848
- GB-A- 2 164 718

## Beschreibung

Die Erfindung betrifft eine Vorrichtung und ein Verfahren zum Verbinden eines Rohrstrangs mit einem Bohr-, Aufweit- oder Einzugsgerät oder dergleichen.

Bei der grabenlosen Rohrverlegung werden Neurohre in eine Bohrung im Erdboden eingezogen. Die Bohrung kann eine während des Einziehens neu hergestellte Bohrung oder eine bereits bestehende Pilotbohrung sein, welche von einem Aufweitgerät auf den gewünschten Durchmesser erweitert wird. Weiterhin werden Aufweitgeräte - sogenannte Berstgeräte - verwendet, um eine verlegte Altleitung zu zerstören und eine Neuleitung an deren Stelle einzuziehen.

Häufig sind die neu zu verlegenden Rohre direkt mit dem vorgetriebenen Werkzeug verbunden, so daß in einem Arbeitsgang die Bohrung erzeugt bzw. aufgeweitet und das Neurohr eingezogen wird.

Besonders häufig werden Neurohre ausgehend von einem Startschacht verlegt. Da die Platzverhältnisse in einem solchen Schacht stark eingeschränkt sind, werden hauptsächlich Neurohrstränge bestehend aus einzelnen Kurzrohren verwendet, die nacheinander eingezogen werden.

Die Zugkraft, die das vorauseilende Werkzeug in Kombination mit der Mantelreibung zwischen den Komponenten und dem Erdreich erzeugt, führt zu einer Zugbeanspruchung des Neurohrs. Diese führt dazu, daß ein Neurohrstrang bestehend aus solchen einzelnen Kurzrohren auseinander gezogen oder ein einzelnes, langes Neurohr stark gedehnt wird.

Aus der DE 196 08 056 C1 ist daher bekannt, über ein spannbares Zugmittel in Form eines Seils das Werkzeug mit einem Adapter an dem Ende des einzuziehenden Rohrstrangs zu verbinden. Dadurch wird sichergestellt, daß die Zugkraft des Werkzeugs über das Seil auf den Adapter übertragen wird, so daß der Rohrstrang zwischen Werkzeug und Adapter zusammengeschoben wird. Dadurch wird ein sicheres Zusammenstecken der Kurzrohre und eine geringe Belastung der Rohre erreicht.

Um das Seil zu spannen, wird in der DE 196 08 056 C1 eine Spannvorrichtung verwendet, die sich an dem Adapter abstützt und über einen Hydraulikzylinder die Verkürzung des Seils bewirkt. Da sich das Ende des letzten Rohrs innerhalb der Startgrube befindet, muß folglich auch die Spannvorrichtung in dieser Grube angeordnet sein.

Wurde das Rohr über die Länge eines Kurzrohrs eingezogen, muß ein weiteres Kurzrohr in den Verbund integriert werden. Dazu wird die Spannvorrichtung gelöst, das weitere Kurzrohr auf das Seil aufgefädelt, der Adapter an dem hinteren Ende des weiteren Kurzrohrs befestigt und das Seil wieder verkürzt. Diese Vorgehensweise ist äußerst arbeits- und zeitaufwendig. Zudem muß die Spannvorrichtung, welche aufgrund der aufzubringenden Kräfte groß und schwer ist, jedesmal innerhalb der Startgrube um mindestens die Länge des Kurzrohrs verschoben werden.

GB 2 164 718 A wird als nächstliegender Stand der Technik angesehen. Es dient auch als Basis für den Oberbegriff des Anspruchs 1.

In der GB 2 164 718 A ist eine Aufweitvorrichtung zum Einziehen eines aus einzelnen Kurzrohren bestehenden Rohrstrangs in eine Pilotbohrung offenbart. Von einer an dem vorderen Ende der Erdbohrung angeordneten Winde ist eine Zugkette durch ein in dem Aufweitkopf angeordnetes Führungsrohr zu einer Adapterplatte geführt, die die auf die Zugkette aufgebrachte Zugkraft auf das hintere Ende des Rohrstrangs überträgt. Um eine Beschädigung der Elemente des Rohrstrangs durch eine zu hohe Zugkraft zu vermeiden, weist der Aufweitkopf noch eine Sperrklinke auf, die über einen Hydraulikzylinder in die Glieder der Zugkette eingeschoben werden kann. Die Sperrklinke ist so ausgeführt, daß eine Bewegung in Zugrichtung verhindert wird, in entgegen gesetzter Richtung jedoch nicht. Eine Erhöhung der Zugkraft bei eingerückter Sperrklinke wird von dieser somit abgestützt, wodurch eine Überlastung des Rohrstrangs vermieden wird. Um ein neues Kurzrohr an den Rohrstrang anzuhängen, ist es bei der Vorrichtung der GB 2 164 718 A notwendig, die Spannung auf der Kette zu reduzieren, diese nach hinten zu ziehen und durch das neue Kurzrohr zu fädeln. Eine solche Vorgehensweise erfordert einen erheblichen Arbeitsaufwand und - insbesondere bei langen Bohrungen mit entsprechend langen Ketten - hohe Kräfte, die in der Regel nicht ohne Hilfsmittel aufgebracht werden können. Zudem ist zu beachten, daß bei den beim Einziehen von Rohrleitungen aufgebrachten erheblichen Zugkräften und bei der häufig großen Länge der Zugkette eine erhebliche Dehnung auftritt. Nach jeder Entlastung der Kette für ein Anschließen eines neuen Kurzrohres muß die Kette somit zunächst wieder gedehnt werden, bevor ein weiterer Vortrieb des Rohrstrangs im Erdreich erfolgen kann. Hiermit ist nicht nur eine schlechte Vortriebsleistung der Vorrichtung verbunden, sondern die Wechselbelastung führt auch zu einer verringerten Lebensdauer der einzelnen Komponenten.

Der Erfindung liegt die Aufgabe zugrunde, eine Vorrichtung und ein Verfahren zum Verbinden eines Rohrstrangs mit einem Bohr-, Aufweit- oder Einzugsgerät oder dergleichen zur Verfügung zu stellen, welche mindestes einen der aus dem Stand der Technik bekannten Nachteile vermeidet.

Diese Aufgabe wird durch den Gegenstand der nebengeordneten Ansprüche gelöst. Vorteilhafte Ausführungen sind in den Unteransprüchen genannt.

Die Erfindung sieht vor, den Zugkrafterzeuger, welcher für das Spannen des Zugmittels verantwortlich ist, in dem Bohr-, Aufweit- oder Einzugsgerät oder dergleichen anzuordnen.

Dadurch kann erreicht werden, daß zur Verlängerung des Rohrstrangs um ein weiteres Kurzrohr lediglich das Zugmittel entspannt werden und der Adapter, an welchem das Zugmittel befestigt ist, an dem neuen Kurzrohr befestigt werden muß. Eine Bewegung des Zugkrafterzeugers während des Ankuppelvorgangs kann dabei entfallen.

Bei einer vorteilhaften Ausgestaltung der Erfindung wird ein Fluidzylinder als Zugkrafterzeuger verwendet, der durch Zufuhr eines Druckfluids eine entsprechende Zugkraft erzeugt. Alternativ zu dem Fluidzylinder können auch andere Arten von Zugkrafterzeugern, insbesondere mit elektromotorischem oder elektromagnetischem Antrieb eingesetzt werden. Auch eine Kombination verschiedener oder gleichartiger Antriebsarten zu einem Zugkrafterzeuger-Verbund ist möglich.

Vorteilhafterweise ist das Zugmittel in Form eines Gestängestrangs ausgebildet. Durch Anhängen von weiteren Gestängeschüssen an den bestehenden Gestängestrang kann dieser entsprechend der Verlängerung des Rohrstrangs mit einem weiteren Kurzrohr verbunden werden. Dadurch kann ein Nachführen des Zugmittels, ausgehend von dem Zugkrafterzeuger, wie es beispielsweise bei Verwendung eines Seils erforderlich wäre, entfallen.

In einer besonders vorteilhaften Ausgestaltung wird die Biege- und Torsionsfestigkeit eines solchen Gestängestrangs genutzt und Schnellverschlüsse zur Verbindung zwischen einzelnen Komponenten des Strangs verwendet. Insbesondere zum Verbinden der Gestängeschüsse untereinander und des ersten sowie des letzten Gestängeschusses mit dem Bohr-, Aufweit- oder Einzugsgerät bzw. mit dem Nachrückadapter ist der Einsatz von Schnellkupplungen sinnvoll.

Zur Verwendung können sämtliche Ausführungsformen von Schnellkupplungen kommen. Diese sollten in der Lage sein, Zugkräfte zu übertragen und dabei möglichst einfach und schnell und ohne den Einsatz von Hilfsmitteln verbunden werden können.

Die erfindungsgemäße Vorrichtung soll jedoch nicht auf den Einsatz eines Zuggestänges eingeschränkt sein. Ebenso können andere Arten von Zugmitteln, insbesondere Seile und Ketten verwendet werden, die beispielsweise von dem Zugkrafterzeuger ausgehend nachgeführt oder durch Anbinden weiterer Stücke verlängert werden. Insbesondere Ketten können durch Einklinken eines Verlängerungsstücks einfach und schnell verlängert werden.

In einer weiteren vorteilhaften Ausgestaltung können ein oder mehrere Auslässe zur Einleitung eines Fluids in die nahe Umgebung der Vorrichtung vorgesehen sein. Dies ist insbesondere dann vorteilhaft, wenn als Antriebsfluid für den Fluidzylinder eine Flüssigkeit verwendet wird, die teilweise durch den Auslaß in die nahe Umgebung eingeleitet wird. Die Flüssigkeit kann zur Verringerung der Mantelreibung dienen und kann dazu bestimmte reibungsverringernde Eigenschaften aufweisen, die auch durch Zuführung von Additiven erzeugt werden können.

Insbesondere Bentonit oder Wasser/Polymeergemische eignen sich für diesen Einsatz, da sie gute Schmiereigenschaften aufweisen und ausreichend umweltverträglich sind.

Besonders vorteilhaft ist der Auslaß im Bereich des Bohr-, Aufweit- oder Einzugsgeräts angeordnet, um das Fluid in den Zwischenraum zwischen Rohrmantel und Erdreich einzuleiten.

Durch die Anordnung mehrerer Auslässe auf dem jeweiligen Gehäuseumfang kann eine gleichmäßige Verteilung des Fluids in dem Zwischenraum erreicht werden.

Vorteilhafterweise können ein oder mehrere Druckbegrenzungsventile in der Fluidzufuhr des Fluidzylinders angeordnet sein. Dadurch kann eine Überlastung von Komponenten des Systems infolge eines zu hohen Fluiddrucks verhindert werden.

Weiterhin kann ein Abfluß des Druckbegrenzungsventils mit dem Auslaß oder den Auslässen zur Einleitung der Fluids in die nahe Umgebung der Vorrichtung verbunden werden. Eine derartige Konstellation kann dazu genutzt werden, daß die Vorrichtung beim Anlegen eines Drucks bis zu einer bestimmten Druckgrenze lediglich zu einem Spannen des Zugmittels führt. Wird der Druck dagegen über die Druckgrenze erhöht, öffnet das Druckbegrenzungsventil und führt einen Teil des Fluidstroms zu dem Auslaß/den Auslässen ab. Der Druck innerhalb des Fluidzylinders kann ab dieser Druckgrenze konstant gehalten werden. Dadurch kann erreicht werden, daß die Vorrichtung beim Anlegen eines Systemdrucks jederzeit das Zugmittel spannt und die Einleitung des Fluids in die Umgebung durch Erhöhung des Systemdrucks über die Druckgrenze gesteuert werden kann. Eine starke Erhöhung des Systemdrucks führt somit lediglich zu einem hohen Volumenstrom durch den order die Auslässe, eine Beschädigung der Spannkomponenten oder des Rohrs wird jedoch durch das Druckbegrenzungsventil verhindert.

In einer weiteren vorteilhaften Ausgestaltung der Erfindung wird die Fluidzufuhr für den Fluidzylinder außerhalb des Innenvolumens des Rohrstrangs verlegt. Dadurch kann verhindert werden, daß die ergänzenden Kurzrohre des Rohrstrangs auf die Fluidzufuhr aufgefädelt werden müssen.

Vorteilhaft ist, wenn die Fluidzufuhr von dem Zielschacht des Arbeitsgangs ausgehend zu der Vorrichtung geführt wird. Dies kann besonders vorteilhaft durch Integration der Fluidzufuhr in ein Schub-/Zugelement, das für den Vortrieb des Bohr-, Aufweit- oder Einzugsgerät vorgesehen ist, erfolgen.

Es ist jedoch auch möglich, die Fluidzufuhr innerhalb des zu verlegenden Neurohrs, insbesondere innerhalb des Zugmittels oder in dem Zwischenraum zwischen Rohr und Erdreich zu führen.

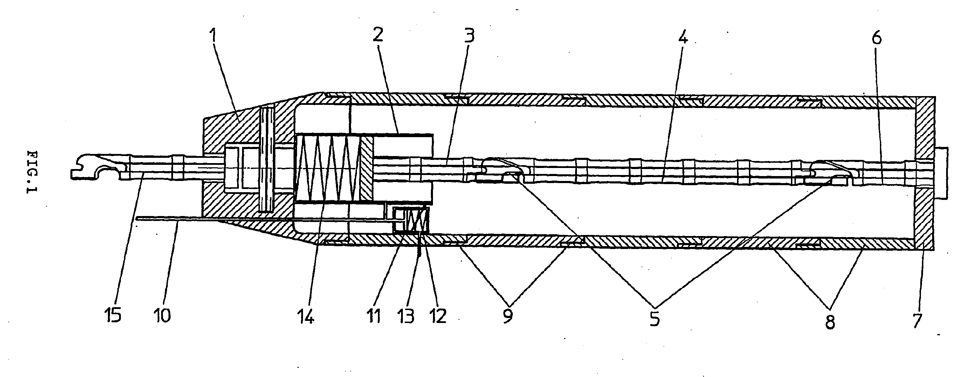

Die Erfindung wird nachfolgend anhand eines in der Zeichnung dargestellten Ausführungsbeispiels näher erläutert.

Die Zeichnung zeigt ein System aus einem Werkzeugkopf 1 mit einem daran befestigten Hydraulikzylinder 2, welcher als Zugkrafterzeuger arbeitet. Der Hydraulikzylinder 2 überträgt in seiner Zugstufe eine Zugkraft auf ein mit dem Kolben 3 verbundenes Zuggestänge, welches aus einzelnen Gestängeschüssen 4 besteht, die über Schnellkupplungen 5 miteinander verbunden sind.

Am vorderen Ende des Werkzeugkopfs 1 ist ein Adapterstück 15 eines Antriebsgestänges angeordnet. Anhand dieses Antriebsgestänges wird die Einheit aus Werkzeugkopf mit angehängtem Rohrstrang durch die Altleitung bewegt.

Als letztes Element des Zuggestänges ist ein Adaptergestänge 6 vorgesehen, das über eine Druckplatte 7 eine Druckkraft auf den Rohrstrang ausübt. Dadurch werden die einzelnen Kurzrohre 8 des Rohrstrangs in ihren Muffen 9 sicher zusammengehalten.

In der Fluidzufuhr 10, die den Hydraulikzylinder 2 mit Druckflüssigkeit versorgt, ist ein Überdruckventil 11 eingefügt. Ein Abfluß 12 des Überdruckventils 11 führt zu einem Auslaß 13 in dem Mantel des ersten Kurzrohrs.

Das Überdruckventil ist so ausgelegt, daß die Druckflüssigkeit bis zu einem bestimmten Druck-Grenzwert ausschließlich zur Versorgung des Hydraulikzylinders 2 verwendet wird. Wird der Grenzwert überschritten, so öffnet das Überdruckventil 11 und ein Teil des Flüssigkeitsstroms wird über den Abfluß 12 und den Auslaß 13 in die Umgebung eingeleitet.

Die Fluidzufuhr 10 wird von vorne (in Bewegungsrichtung) zu dem Hydraulikzylinder geführt. Dadurch kann vermieden werden, daß bei einer Erweiterung des Rohrstrangs durch ein zusätzliches Kurzrohr 8 dieses auf die Fluidzufuhr aufgefädelt werden muß. Würde die Fluidzufuhr dagegen außerhalb zwischen dem Mantel der Kurzrohre und dem Erdreich geführt werden, so würde sich der Reibungswiderstand der Rohrstrangbewegung erhöhen und die Fluidzufuhr verschleißen.

Um ein weiteres Kurzrohr 8 in den Rohrstrang zu integrieren wird nun zunächst der Arbeitsdruck in dem Hydraulikzylinder 2 reduziert, bis die Federkraft der Rückstellfeder 14 die Druckkraft des Kolbens 3 übersteigt. Das Zuggestänge wird somit entspannt und das Adaptergestänge 6 kann mitsamt der Druckplatte 7 abgenommen werden. Daraufhin wird ein weiteres Kurzrohr 8 zu dem Rohrstrang hinzugefügt und der Gestängestrang durch einen weiteren Gestängeschuß 4 oder ein verlängertes Adaptergestänge 6 ergänzt.

In der vorliegenden Ausführungsform wird ein einstufig wirkender Zylinder 2 verwendet, der gegen die Kraft einer Rückstellfeder 14 arbeitet. Gleichsam ist möglich, einen doppelstufig arbeitenden Zylinder oder zwei gegenläufig arbeitende Zylinder zu verwenden.

## Patentansprüche

1. Vorrichtung zum Verbinden eines mehrteiligen Rohrstrangs (8) mit einem Bohr-, Aufweit- oder Einzugsgerät mit einem mit einem Teil des Rohrstrangs verbundenen Zugmittel (4) und einem Zugkrafterzeuger (2), wobei der Zugkrafterzeuger für ein Spannen des Zugmittels vorgesehen ist, um die Teile des Rohrstrangs zusammenzuhalten, **gekennzeichnet durch** die Anordnung des Zugkrafterzeugers (2) in dem Bohr-, Aufweit- oder Einzugsgerät.

2. Vorrichtung nach Anspruch 1, **gekennzeichnet durch** einen Fluidzylinder (2) als Zugkrafterzeuger.

3. Vorrichtung nach einem der vorhergehenden Ansprüche, **gekennzeichnet durch** ein Zugmittel in Form eines Gestängestrangs.

4. Vorrichtung nach Anspruch 3, **gekennzeichnet durch** formschlüssige Schnellverschlüsse (5) zur Verbindung einzelner Gestängeschüsse (4) des Gestängestrangs und/oder der Gestängeschüsse (4) mit einem Nachrückadapter (6, 7) und/oder einem Kolben (3) des Fluidzylinders.

5. Vorrichtung nach einem der vorhergehenden Ansprüche, **gekennzeichnet durch** mindestens einen Auslaß (13) zur Einleitung eines Fluids in die nahe Umgebung der Vorrichtung.

6. Vorrichtung nach einem der vorhergehenden Ansprüche, **gekennzeichnet durch** ein Druckbegrenzungsventil (11) in der Fluidzufuhr (10) des Fluidzylinders (2).

7. Vorrichtung nach Anspruch 5 und 6, **gekennzeichnet durch** eine Verbindung eines Abflusses (12) des Druckbegrenzungsventils (11) mit dem Auslaß (13) zur Einleitung eines Fluids in die nahe Umgebung der Vorrichtung.

8. Vorrichtung nach einem der vorhergehenden Ansprüche, **gekennzeichnet durch** die Verlegung einer Fluidzufuhr (10) für den Fluidzylinder (2) außerhalb des Innenvolumens des Rohrstrangs.

9. Vorrichtung nach Anspruch 8, **dadurch gekennzeichnet, daß** die Fluidzufuhr (10) in ein Schub-/Zugelement, das für den Vortrieb des Bohr-, Aufweit- oder Einzugsgeräts vorgesehen ist, integriert ist.

10. Vorrichtung nach einem der Ansprüche 1 bis 8, **dadurch gekennzeichnet, daß** die Fluidzufuhr (10) innerhalb des Rohrstrangs angeordnet ist.

11. Vorrichtung nach Anspruch 10, **dadurch gekennzeichnet, daß** die Fluidzufuhr (10) in das Zugmittel integriert ist.

12. Verfahren zum Verbinden eines mehrteiligen Rohrstrangs (8) mit einem Bohr-, Aufweit- oder Einzugsgerät mit einem mit einem Teil des Rohrstrangs verbundenen Zugmittel (4), und einem Zugkrafterzeuger (2), wobei der Zugkrafterzeuger für ein Spannen des Zugmittels vorgesehen ist, um Teile des Rohrstrangs zusammenzuhalten **gekennzeichnet durch** die Erzeugung einer Zugkraft zum Verbinden des Rohrstrangs mit dem Bohr-, Aufweit- oder Einzugsgerät im Bereich des Bohr-, Aufweit- oder Einzugsgeräts.

13. Verfahren nach Anspruch 12, **dadurch gekennzeichnet, daß** ein Fluid in die nähere Umgebung des Bohr-, Aufweit- oder Einzugsgeräts eingeleitet wird.

14. Verfahren nach Anspruch 13, **dadurch gekennzeichnet, daß** das Fluid sowohl für die Erzeugung der Zugkraft zum Verbinden des Rohrstrangs mit dem Bohr-, Aufweit- oder Einzugsgerät eingesetzt als auch zur Verringerung der Mantelreibung in die Umgebung eingeleitet wird.

15. Verwendung einer Vorrichtung nach einem der Ansprüche 1 bis 11 zum Einziehen eines an das Bohr-, Aufweit- oder Einzugsgerät angehängten Bohrstrangs.

## Claims

1. Device for connecting a multi-part pipe string (8) with a drilling, widening, or drawing apparatus, with a drawing means (4) connected to a part of the pipe string, and a drawing force generator (2), wherein the drawing force generator is provided for the purpose of tensioning the drawing means in order to hold the parts of the pipe string together, **characterised by** the arrangement of the drawing force generator (2) in the drilling, widening, or drawing apparatus.

2. Device according to Claim 1, **characterised by** a fluid cylinder (2) as a drawing force generator.

3. Device according to one of the preceding claims, **characterised by** a drawing means in the form of a rod string.

4. Device according to Claim 3, **characterised by** positive-fit quick-action fasteners (5) for connecting individual rod sections (4) of the rod string and/or the rod sections (4) with an adapter for advance movement (6, 7) and/or a piston (3) of the fluid cylinder.

5. Device according to one of the preceding claims, **characterised by** at least one outlet (13) for the introduction of a fluid into the close vicinity of the device.

6. Device according to one of the preceding claims, **characterised by** a pressure limiting valve (11) in the fluid feed (10) of the fluid cylinder (2).

7. Device according to Claim 5 and 6, **characterised by** a connection of an outflow (12) of the pressure limiting valve (11) to the outlet (13) for the introduction of a fluid into the close vicinity of the device.

8. Device according to one of the preceding claims, **characterised by** the laying of a fluid feed (10) for the fluid cylinder (2) outside the inner volume of the pipe string.

9. Device according to Claim 8, **characterised in that** the fluid feed (10) is integrated into a push/pull element, which is provided for the driving of the drilling, widening, or drawing apparatus.

10. Device according to one of claims 1 to 8, **characterised in that** the fluid feed (10) is arranged inside the pipe string.

11. Device according to Claim 10, **characterised in that** the fluid feed (10) is integrated into the drawing means.

12. Method for connecting a multi-part pipe string (8) with a drilling, widening, or drawing apparatus with a drawing means (4) connected to a part of the pipe string, and a drawing force generator (2), wherein the drawing force generator is provided for the tensioning of the drawing means in order to hold parts of the pipe string together, **characterised by** the generation of a drawing force for connecting the pipe string to the drilling, widening, or drawing apparatus in the area of the drilling, widening, or drawing apparatus.

13. Method according to Claim 12, **characterised in that** a fluid is introduced into the close vicinity of the drilling, widening, or drawing apparatus.

14. Method according to Claim 13, **characterised in that** the fluid is both used for the generation of the drawing force for connecting the pipe string to the drilling, widening, or drawing apparatus, and is introduced for reducing the casing friction in the surrounding area.

15. Use of a device according to one of claims 1 to 11 for drawing a drill string suspended on the drilling, widening, or drawing apparatus.

## Revendications

1. Dispositif pour raccorder une ligne de tubes (8) à plusieurs éléments à un appareil de forage, d'élargissement ou de rentrée, comprenant un moyen de traction (4) raccordé à un élément de la ligne de tubes et un générateur de force de traction (2), sachant que le générateur de force de traction est prévu pour serrer le moyen de traction afin de maintenir ensemble les éléments de la ligne de tubes, **caractérisé en ce que** le générateur de force de traction (2) est disposé dans l'appareil de forage, d'élargissement ou de rentrée.

2. Dispositif selon la revendication 1, **caractérisé par** un vérin hydraulique ou pneumatique (2) comme générateur de force de traction.

3. Dispositif selon l'une des revendications précédentes, **caractérisé par** un moyen de traction sous la forme d'un train de tiges.

4. Dispositif selon la revendication 3, **caractérisé par** des raccords rapides (5) à complémentarité de forme pour raccorder entre elles les tiges individuelles (4) du train de tiges, et/ou pour raccorder les tiges (4) à un adaptateur arrière (6, 7) et/ou à un piston (3) du vérin.

5. Dispositif selon l'une des revendications précédentes, **caractérisé par** au moins une évacuation (13) pour introduire un fluide dans l'environnement proche du dispositif.

6. Dispositif selon l'une des revendications précédentes, **caractérisé par** une soupape de limitation de pression (11) dans l'alimentation en fluide (10) du vérin (2).

7. Dispositif selon les revendications 5 et 6, **caractérisé en ce que** la sortie (12) de la soupape de limitation de pression (11) est reliée à l'évacuation (13) destinée à introduire un fluide dans l'environnement proche du dispositif.

8. Dispositif selon l'une des revendications précédentes, **caractérisé en ce que** l'alimentation en fluide (10) pour le vérin (2) est placée en dehors du volume intérieur de la ligne de tubes.

9. Dispositif selon la revendication 8, **caractérisé en ce que** l'alimentation en fluide (10) est intégrée dans un élément de poussée/traction qui est prévu pour l'avancement de l'appareil de forage, d'élargissement ou de rentrée.

10. Dispositif selon l'une des revendications 1 à 8, **caractérisé en ce que** l'alimentation en fluide (10) est disposée à l'intérieur de la ligne de tubes.

11. Dispositif selon la revendication 10, **caractérisé en ce que** l'alimentation en fluide (10) est intégrée dans le moyen de traction.

12. Procédé pour raccorder une ligne de tubes (8) à un appareil de forage, d'élargissement ou de rentrée, comprenant un moyen de traction (4) raccordé à un élément de la ligne de tubes et un générateur de force de traction (2), sachant que le générateur de force de traction est prévu pour serrer le moyen de traction afin de maintenir ensemble les éléments de la ligne de tubes, **caractérisé en ce que** la force de traction pour raccorder la ligne de tubes à l'appareil de forage, d'élargissement ou de rentrée est produite dans la région de l'appareil de forage, d'élargissement ou de rentrée.

13. Procédé selon la revendication 12, **caractérisé en ce qu'**un fluide est introduit dans l'environnement immédiat de l'appareil de forage, d'élargissement ou de rentrée.

14. Procédé selon la revendication 13, **caractérisé en ce que** le fluide est utilisé pour produire la force de traction destinée à raccorder la ligne de tubes à l'appareil de forage, d'élargissement ou de rentrée et, en même temps, est introduit dans l'environnement pour réduire la friction de l'enveloppe.

15. Utilisation d'un dispositif selon l'une des revendications 1 à 11 pour rentrer une ligne de tubes accrochée à l'appareil de forage, d'élargissement ou de rentrée.
